## Europäisches Patentamt
## European Patent Office
## Office européen des brevets

(19)

(11) Veröffentlichungsnummer : **0 141 039**
**B1**

(12)

# EUROPÄISCHE PATENTSCHRIFT

(45) Veröffentlichungstag der Patentschrift :
23.12.87

(21) Anmeldenummer : 84108202.7

(22) Anmeldetag : 12.07.84

(51) Int. Cl.⁴ : **C 09 K 17/00, C 04 B 28/26 //**
**(C04B28/26, 22:16, 24:42)**

(54) Gelbildendes Gemisch auf Alkalimetallsilicatbasis.

(30) Priorität : 13.08.83 DE 3329403

(43) Veröffentlichungstag der Anmeldung :
15.05.85 Patentblatt 85/20

(45) Bekanntmachung des Hinweises auf die Patenterteilung : 23.12.87 Patentblatt 87/52

(84) Benannte Vertragsstaaten :
AT BE CH DE FR GB IT LI LU NL SE

(56) Entgegenhaltungen :
EP-A- 0 082 971
EP-A- 0 139 838
US-A- 4 056 937

(73) Patentinhaber : **DYNAMIT NOBEL AKTIENGESELL-**
**SCHAFT**
**Postfach 1209**
**D-5210 Troisdorf, Bez. Köln (DE)**

(72) Erfinder : **Burkhardt, Rudolf, Dr.**
**Im Hahn 1**
**D-5461 Vettelschoss (DE)**
Erfinder : **Hass, Hansjürgen, Dr.**
**Telegrafstrasse 27**
**D-5210 Troisdorf-Spich (DE)**

Jouve, 18, rue St-Denis, 75001 Paris, France

**0 141 039**

**Beschreibung**

Die Erfindung betrifft ein gelbildendes Gemisch aus Alkalimetallsilicat, Wasser, einem oder mehreren Trialkoxysilanen der Formel R—Si(OR')$_3$ als Geliermittel und einem zusätzlichen Mittel zur Einstellung der Gelzeit und/oder Gelfestigkeit.

Flüssige Gemische, die Alkalimetallsilicate, Wasser und Trialkoxysilane der Formel R—Si(OR')$_3$ in geeigneten Mengenverhältnissen enthalten, bilden Gele von geringer Wasserdurchlässigkeit und einer mit der Zeit zunehmenden Festigkeit (vgl. DE-OS 31 51 680). Durch Injektion der flüssigen Gemische in durchlässige, rollige Böden können diese abgedichtet und stabilisiert werden. Die Gelzeit der Gemische und die Festigkeit der entstehenden Gele können durch zusätzliche Mittel beeinflußt werden. Diese Mittel können z. B. Hydroxide und alkalisch reagierende Salze der Alkalimetalle oder an sich bekannte Geliermittel für Alkalisilicatlösungen sein.

Die gelbildenden, Trialkoxysilane enthaltenden Injektionsgemische werden auch zur Verhinderung des Eindringens von Schadstoffen in das Grundwasser angewendet.

Es ist weiterhin aus der US-PS 4 056 937 bekannt, die Härtung von Wasserglaslösungen, die zum Aushärten von Böden in diese injiziert werden, durch Zusatz von sauren Verbindungen zu beschleunigen. Es läßt sich durch diesen Zusatz zwar die Härtungszeit verkürzen, aber es erfolgt dabei praktisch keine Herabsetzung der Synärese.

Aufgabe der vorliegenden Erfindung ist es, durch ein geeignetes Zusatzmittel zu gelbildenden Gemischen aus Alkalimetallsilicat, Wasser und einem Trialkoxysilan optimale Gelzeiten und Geleigenschaften einstellen zu können.

Gemäß der Erfindung wird diese Aufgabe durch ein gelbildendes Gemisch aus Alkalimetallsilicat, Wasser, einem oder mehreren Trialkoxysilanen der Formel RSi(OR')$_3$ als Geliermittel und einem zusätzlichen Mittel zur Einstellung der Gelzeit und/oder Gelfestigkeit gelöst, bei dem das zusätzliche Mittel ein saures Alkalimetall- oder Ammoniumphosphat ist.

Bevorzugt werden Natrium- oder Kaliumphosphate mit einem Phosphorsäureüberschuß verwendet, wobei die Zusammensetzung einem Molverhältnis H$_3$PO$_4$: NaOH bzw. KOH = 1,01 bis 1,2 : 1 entspricht.

Die zusätzlichen Mittel werden in 2-15 %iger wäßriger Lösung eingesetzt, deren pH-Wert etwa 2-4 beträgt.

Durch den erfindungsgemäßen Zusatz saurer Phosphate zu gelbildenden Gemischen aus Alkalimetallsilicaten (Wasserglas), Wasser und Trialkoxysilanen werden folgende Vorteile erreicht :

1. Die Gelzeiten der Gemische lassen sich sowohl durch die Silanmenge als auch durch die Phosphatmenge regeln. Es ist daher möglich, Gemische mit gleicher Gelzeit, aber unterschiedlichen Silan- und Phosphatgehalten und daher auch unterschiedlichen an den jeweiligen Verwendungszweck angepaßten Eigenschaften herzustellen.

2. Der Anstieg der Gelfestigkeit erfolgt schneller und die Gelfestigkeit erreicht höhere Werte als ohne Zusatz.

3. Die Synärese der Gele wird wesentlich herabgesetzt und verlangsamt. Die Gele besitzen daher eine sehr gute und lang anhaltende abdichtende Wirkung.

4. Der Silananteil kann ohne Verschlechterung der Geleigenschaften deutlich gesenkt werden. Damit werden auch die Kosten der Injektionsgemische entsprechend herabgesetzt. Obwohl bei Anwendung von Trialkoxysilane enthaltenden Injektionsgemischen nur biologisch leicht abbaubare Alkohole als Nebenprodukte auftreten, kann deren Verminderung ebenfalls als Vorteil angesehen werden.

Die aus den erfindungsgemäßen Gemischen entstehenden Gele sind in ihren Eigenschaften auch den aus der US-PS 4 056 937 bekannten Gelen, die unter Zusatz der als Geliermittel bekannten sauren Phosphate und/oder Phosphorsäure aus Alkalisilicatlösungen erhalten werden, weit überlegen. Nachteile der so erhaltenen bekannten Gele sind z. B. die schon bei niedriger Silicatkonzentration relativ hohe Synärese, die zu einer geringeren und nicht anhaltenden Abdichtungswirkung führt, und die geringe Kohäsion und Adhäsion der Gele mit der Folge u. a. einer geringen Widerstandsfähigkeit der Gele gegen anströmendes Wasser und einer bei höherer Silicatkonzentration trotz starker Synärese nur mäßigen Druckfestigkeit der Gele.

Die erfindungsgemäßen Gemische bilden Gele von hoher Beständigkeit gegen wäßrige Lösungen von Chemikalien und nichtwäßrige organische Flüssigkeiten. Sie eignen sich daher nicht nur zur Abdichtung durchlässiger Böden gegen Wasser, sondern auch gegen flüssige Schadstoffe.

Die Herstellung der erfindungsgemäßen Gemische kann nach den bekannten Methoden erfolgen, wonach man Wasserglaslösung und Wasser im gewünschten Verhältnis mischt, die benötigte Menge an Trialkoxysilan, eventuell unter Verwendung eines vorwiegend nichtionogenen, aber auch anionischen Emulgators oder von Gemischen aus beiden, zusetzt und bis zu dessen Lösung rührt, wozu etwa 10 bis 45 Minuten erforderlich sind.

Oder man löst die benötigte Trialkoxysilanmenge in der etwa gleichen Menge Wasser, das mit sehr wenig Mineralsäure auf einen pH-Wert von 3 bis 4 gebracht wurde und setzt diese Lösung dem Gemisch aus Wasserglas und restlichem Wasser zu. Die erste Methode ist für praktisch alle Konzentrationsverhältnisse brauchbar, die zweite etwas schnellere Methode für Gemische mit niedrigerem Wasserglasgehalt

2

(< 50 Vol.-%).

Als vorteilhaft hat sich die in den nachfolgenden Beispielen beschriebene Variation der vorstehenden letztgenannten Methode erwiesen, wonach das Trialkoxysilan in der sauren Phosphatlösung hydrolytisch gelöst und die erhaltene Lösung der Alkalimetallsilicatlösung zugemischt wird. Als Alkalimetallsilicatlösungen eignen sich handelsübliche Natronwasserglaslösungen von 24 bis 41 °Bé (spez. Gew. 1,20-1,40 g/cm³), besonders solche von 26-32 Bé (1,22-1,28 g/cm³) und bei einem Molverhältnis $SiO_2 : Na_2O$ von 3,5 : 1 bis 4,0 : 1.

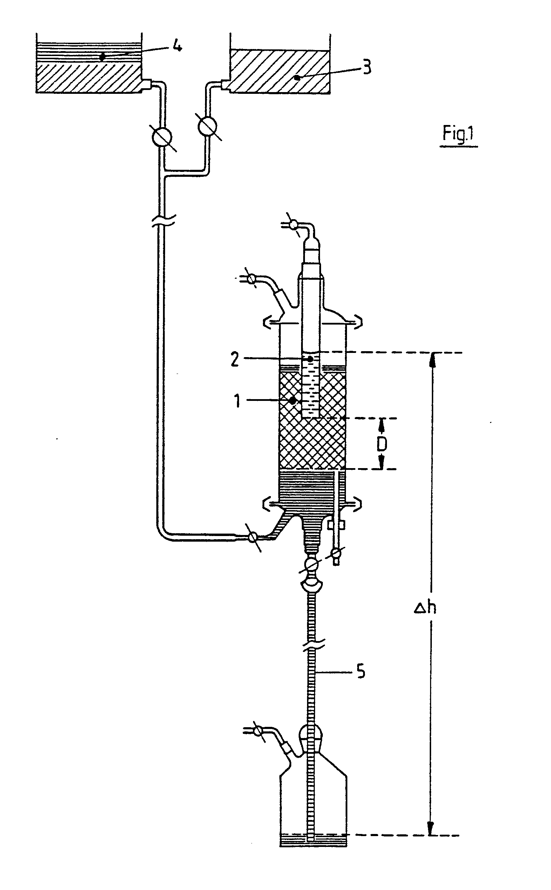

Zur Prüfung der abdichtenden Wirkung und Schadstoffbeständigkeit wurde ein den Praxisverhältnissen angepaßtes Laborgerät nach Fig. 1 verwendet. Es besteht aus einem zylindrischen Glasgefäß von 10 cm Durchmesser, in dem sich auf einer Siebplatte eine Sandschicht 1 befindet. Aus dem Vorratsbehälter 3 wird das gelbildende Gemisch von unten in den Sand gedrückt, bis dessen Porenvolumen vollständig gefüllt ist. Nach dem Erstarren des Gemisches wird das Gel unterhalb der Siebplatte entfernt und durch Wasser aus dem Vorratsbehälter 4 ersetzt. Die Belastung des Gel/Sand-Gemisches mit Schadstoff bzw. Wasser erfolgt durch ein in der Mitte der Schicht 1 endendes, graduiertes Rohr 2. Der hydraulische Gradient I = Δh/D wird überwiegend durch den Sog der Wassersäule im Tauchrohr 5 erzeugt.

Der Durchlässigkeitskoeffizient k, der in den folgenden Beispielen angegeben wird, ist nach DARCY k = Q/I · F cm/s, wobei

Q die durchlaufende Flüssigkeitsmenge in cm³/s ist, die am Absinken des Flüssigkeitsstandes im graduierten Rohr 2 abgelesen wird,

I der hydraulische Gradient, dessen Wert sich entsprechend Figur 1 aus dem Niveauunterschied Δh und der Dicke der durchflossenen Sand/Gel-Schicht D ergibt und bei den einzelnen Beispielen angegeben ist,

F der durchflossene Querschnitt der Sand/Gel-Schicht, der bei dieser Versuchsanordnung vom Eintritt bis zum Austritt der Flüssigkeit zunimmt und daher mit dem Mittelwert F = 33,2 cm² eingesetzt wird.

Wie aus den nachfolgenden Beispielen hervorgeht, ermöglicht die erfindungsgemäße Kombination von Trialkoxysilanen mit sauren Phosphaten im Bereich niedriger Wasserglaskonzentration die Bildung von Gelen mit außergewöhnlich geringer Synärese (Beispiel 1), mit denen eine entsprechend hohe Abdichtungswirkung erreicht werden kann (Beispiel 3). Der überraschende Effekt, daß der Zusatz von geringen Mengen an Trialkoxysilanen zu gelbildenden Gemischen aus Wasserglaslösung und sauren Phosphaten deren Gelbildung sehr stark verzögert, kann sowohl zur Erhöhung der Festigkeit als auch der Schadstoffbeständigkeit der Gele genutzt werden (Beispiel 2). Die Herabsetzung der Gelzeiten auf brauchbare Wert, die häufig zwischen 30 und 75 Minuten liegen, gelingt durch Erhöhen der Zusatzmengen an saurem Phosphat und/oder Trialkoxysilan. Durch Erhöhung der Phosphat/Phosphorsäure-Menge über den ohne Trialkoxysilanzusatz möglichen Wert hinaus wird hauptsächlich die Gelfestigkeit erhöht, durch einen höheren Trialkoxysilangehalt die Schadstoffbeständigkeit verbessert. In beiden Fällen werden Gele mit geringerer Synärese erhalten als bei Verwendung von saurem Phosphat oder Trialkoxysilan allein, was sich auf die abdichtende Wirkung vorteilhaft auswirkt.

Beispiel 1

Zur Herstellung von je etwa 200 ml Gel wurden 40 ml handelsübliche Natronwasserglaslösung mit einer Dichte von 1,23 g · cm⁻³, einem $SiO_2$-Gehalt von 20,5 Gew.-% und einem $Na_2O$-Gehalt von 5,35 Gew.-% mit Wasser auf 100 ml aufgefüllt und mit der auf ebenfalls 100 ml aufgefüllten Geliermittellösung vermischt. Diese wurde durch Lösen der in der Tabelle angegebenen Mengen Phosphorsäure (85 %ig) und Natriumhydroxid (98 %ig) in 80 ml Wasser, Zugabe des n-Propyltrimethoxysilans und Rühren bis zu dessen Lösung (10-15 Minuten) hergestellt. Während der vom Vermischen bis zum Erstarren des Gemischs reichenden Gelzeit wurde die Temperatur auf 20 ºC gehalten. Zur Bestimmung der Synärese wurde die durch Gelkontraktion abgeschiedene Flüssigkeitsmenge gemessen und in Vol.-%, bezogen auf das Gesamtvolumen, angegeben.

Die Vergleichsversuche A und B wurden mit der gleichen Wasserglasmenge, aber jeweils nur mit einer der beiden Geliermittelkomponenten durchgeführt, A mit der sauren Phosphatlösung, B mit einer Lösung von n-Propyltrimethoxysilan (PTMS) in Wasser vom pH 3,3 (100 mg Ameisensäure auf 1 l entmineralisiertes Wasser). Die Mittel wurden in den zur Erzielung etwa gleicher Gelzeiten notwendigen Mengen zugesetzt.

| Vers.-Nr. | $H_3PO_4$ g | NaOH g | PTMS g | Gelzeit min | Synärese nach 20 Tg. % | nach 50 Tg. % |
|---|---|---|---|---|---|---|
| 1 | 5,20 | 1,75 | 3 | 57 | 0,1 | 0,5 |
| 2 | 5,28 | 1,78 | 3 | 42 | 0,1 | 0,5 |

**0 141 039**

(Fortsetzung)

| Vers.-Nr. | $H_3PO_4$ g | NaOH g | PTMS g | Gelzeit min | Synärese nach 20 Tg. % | nach 50 Tg. % |
|---|---|---|---|---|---|---|
| 3 | 5,35 | 1,80 | 3 | 31 | 0,1 | 0,6 |
| A | 3,90 | 1,31 | – | 42 | 1,9 | 3,4 |
| B | – | – | 9,9 | 42 | 20,8 | 35,5 |

Beispiel 2

Zur Herstellung von etwa 200 ml Gel wurden 100 ml der im Beispiel 1 verwendeten Natronwasserglaslösung eingesetzt, die ohne weitere Verdünnung mit der auf 100 ml aufgefüllten Geliermittellösung vermischt wurden. Diese wurden wie im Beispiel 1 beschrieben hergestellt.

Der Vergleichsversuch A wurde ohne Zusatz von n-Propyltrimethoxysilan durchgeführt. Im Versuch 1 bewirkt dessen Zusatz eine vielfache Verlängerung der Gelzeit, die im Versuch 2 durch Erhöhung der Phosphorsäuremenge, im Versuch 3 durch Erhöhung der Menge an n-Propyltrimethoxysilan verkürzt wird.

| Vers.-Nr. | $H_3PO_4$ g | NaOH g | PTMS g | Gelzeit min | Gelkon-sistenz nach 7 Tagen | Synärese nach 20 Tg. % | 50 Tg % |
|---|---|---|---|---|---|---|---|
| A | 4,46 | 1,5 | – | 39 | fest, brüchig | 6,3 | 19,0 |
| 1 | 4,46 | 1,5 | 3 | ca.600 | weich, elastisch | 1,1 | 3,5 |
| 2 | 6,30 | 2,1 | 3 | 42 | fester als A u. 3 | 1,6 | 4,0 |
| 3 | 4,46 | 1,5 | 13 | 40 | fest, elastisch | 2,3 | 7,0 |

Beispiel 3

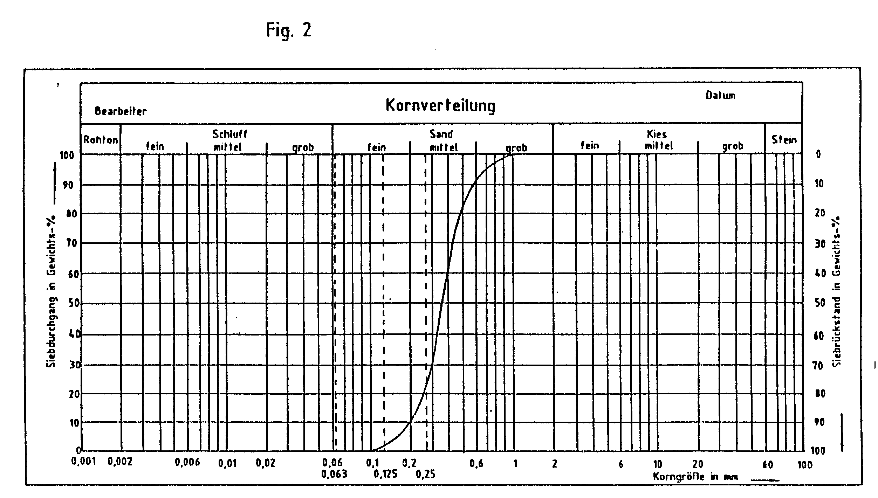

Zur Prüfung der Wasserdurchlässigkeit von gelhaltigem-Sand wurde in die Laborapparatur nach Fig. 1 Mittelsand der in Fig. 2 angegebenen Korngrößenverteilung eingefüllt. In die Sandschicht wurde ein Injektionsgemisch eingepreßt, dessen Herstellung nachfolgend beschrieben ist:

In 1 400 ml Wasser wurden 64,2 g 85 %ige Phosphorsäure und 21,6 g 98 %iges Natriumhydroxid gelöst, 140 g n-Propyltrimethoxysilan zugesetzt und bis zur Lösung 15 Minuten gerührt. Die Lösung wurde auf 1 600 ml aufgefüllt und in das Gemisch aus 640 ml Natronwasserglas (Dichte = 1,25 g · cm$^{-3}$, $SiO_2$ = 21,9 Gew.-%, $Na_2O$ = 5,7 Gew.-%) und 960 ml Wasser eingerührt.

Das Injektionsgemisch, das auf der Sandoberfläche eine ca. 7 mm hohe Schicht bildete, erstarrte nach einer Gelzeit von 41 Minuten. Das graduierte Rohr 2 wurde mit Wasser gefüllt und nach 24 Stunden mit Hilfe des Tauchrohrs 5 ein hydraulischer Gradient I = 16 angelegt. Der Wasserstand im Rohr 2 wurde täglich abgelesen und wieder aufgefüllt. Die Durchflußmenge betrug nach 42 Tagen insgesamt 17,6 ml, nach 62 Tagen 24,5 ml, entsprechend einem k-Wert von 8,6 · 10$^{-7}$ cm/s.

Beispiel 4

Zur Prüfung der Schadstoffdurchlässigkeit und -beständigkeit von gelhaltigem Sand wurde die Gel/Sand-Schicht 1 in der Laborapparatur nach Fig. 1 unter einem hydraulischen Gradienten I = 16,8 mit Trichlorethylen belastet, das sich im graduierten Rohr 2 befand.

Das gelbildende Injektionsgemisch wurde wie folgt hergestellt: 89,3 g 85 %ige Phosphorsäure und 30 g Natriumhydroxid (98 %ig) wurden in 1 200 ml Wasser gelöst, 90 g Isobutyltrimethoxysilan zugesetzt und 50 Minuten gerührt. Die Lösung wurde auf 1 500 ml aufgefüllt und in 1 500 ml Natronwasserglas

4

(Dichte = 1,23 g · cm$^{-3}$, SiO$_2$ = 20,5 Gew.-%, Na$_2$O = 5,35 Gew.-%) eingerührt. Das Gemisch hatte eine Gelzeit von 50 Minuten.

Die Prüfung begann 24 Stunden nach der Gelbildung und wurde nach 81 Tagen beendet. Während der ersten 9 Tage nahm der Stand des Trichlorethylens im graduierten Rohr 2 um insgesamt 5,3 ml ab. In den folgenden 72 Tagen veränderte er sich nicht mehr. Da das anfangs eingedrungene Trichlorethylen die Gel/Sand-Schicht nicht durchdrang, wurde eine vollständige Abdichtung erzielt (k = 0 m/s).

**Patentansprüche**

1. Gelbildendes Gemisch aus Alkalimetallsilicat, Wasser, einem oder mehreren Trialkoxysilanen der Formel R—Si(OR')$_3$ als Geliermittel und einem zusätzlichen Mittel zur Einstellung der Gelzeit und/oder Gelfestigkeit, dadurch gekennzeichnet, daß das zusätzliche Mittel ein saures Alkalimetall- oder Ammoniumphosphat ist.

2. Gelbildendes Gemisch nach Anspruch 1, dadurch gekennzeichnet, daß das zusätzliche Mittel ein saures Alkalimetallphosphat mit einem Phosphorsäureüberschuß ist, der einem Molverhältnis von H$_3$PO$_4$ : NaOH bzw. KOH = 1,01 : 1 bis 1,2 : 1 entspricht.

3. Gelbildendes Gemisch nach Anspruch 1, dadurch gekennzeichnet, daß die 2-15 %ige wäßrige Lösung des zusätzlichen Mittels einen pH-Wert von 2-4 aufweist.

4. Verwendung des Gemisches nach Anspruch 1 zur Bodenverfestigung und Bodenabdichtung.

5. Verwendung des Gemisches nach Anspruch 1 zur Immobilisierung von im Boden befindlichen Schadstoffen.

**Claims**

1. Gel-forming mixture of alkali metal silicate, water, one or several trialkoxy silanes of the formula R—Si(OR')$_3$ as gelling means and an additional means for regulating the gel time and/or gel strength, characterised in that the additional means is an acid alkali metal or ammonium phosphate.

2. Gel-forming mixture according to claim 1, characterised in that the additional means is an acid alkali metal phosphate with a phosphoric acid excess which corresponds to a molar ratio of H$_3$PO$_4$ : NaOH or KOH = 1.01 : 1 to 1.2 : 1.

3. Gel-forming mixture according to claim 1, characterised in that the 2-15 % aqueous solution of the additional means possesses a pH value of 2-4.

4. Use of the mixture according to claim 1 for solidification of soil and sealing of soil.

5. Use of the mixture according to claim 1 for the immobilisation of harmful substances located in the soil.

**Revendications**

1. Mélange gélifiant de silicate de métal alcalin, d'eau, d'un ou plusieurs trialcoxysilanes de formule R—Si(OR')$_3$ comme agent de gélification et d'un agent supplémentaire, pour régler le temps de gélification et/ou la résistance mécanique du gel, mélange caractérisé en ce que l'agent supplémentaire est un phosphate acide de métal alcalin ou d'ammonium.

2. Mélange gélifiant selon la revendication 1, caractérisé en ce que l'agent supplémentaire est un phosphate acide de métal alcalin avec un excès d'acide phosphorique, correspondant à un rapport molaire de H$_3$PO$_4$ : NaOH ou KOH = 1,01 : 1 à 1,2 : 1.

3. Mélange gélifiant selon la revendication 1, caractérisé en ce que la solution aqueuse de 2 à 15 % de l'agent supplémentaire présente un pH de 2 à 4.

4. Utilisation du mélange selon la revendication 1 pour consolider un sol et étancher un sol.

5. Utilisation du mélange selon la revendication 1 pour immobiliser des substances nuisibles se trouvant dans le sol.

Fig.1

Fig. 2